# EUROPÄISCHE PATENTANMELDUNG

(11) **EP 2 672 249 A2**
(43) Veröffentlichungstag der Anmeldung: **11.12.2013**
(21) Anmeldenummer: 13169768.2
(22) Anmeldetag: 29.05.2013
(51) Int. Cl.: G01N 3/08, G01N 19/04

(54) **Vorrichtung zum Aufbringen einer gerichteten Andruckkraft auf eine Vielzahl von Proben**

(30) Priorität: 06.06.2012 DE 102012104925; 13.02.2013 DE 102013101434; 21.05.2013 DE 102013105150
(71) Anmelder: Bundesrepublik Deutschland, vertreten durch das Bundesministerium für Wirtschaft und Technologie, dieses vertreten durch den Präsidenten der BAM,, 12205 Berlin (DE)
(72) Erfinder: Beck, Uwe, 14612 Falkensee (DE); Hielscher, Stefan, 12487 Berlin (DE); Weise, Matthias, 13156 Berlin (DE); Kittler, Kai, 10829 Berlin (DE)
(74) Vertreter: Zimmermann & Partner

(57) **Zusammenfassung**

Vorrichtung 1, 1a zum Aufbringen einer gerichteten Andruckkraft auf eine Vielzahl von Proben, wobei ein erster Teil 21 der Vorrichtung eine Vielzahl von Probenaufnahmen 21a aufweist, die angepasst ist, eine Vielzahl von gleichartigen Fügeflächenmodulen 40 aufzunehmen, und ein zweiter Teil 22 der Vorrichtung mit dem ersten Teil 21 verbindbar ist, sodass eine Vielzahl fluidisch miteinander kommunizierender Hydraulikzylinder 25 in einem der beiden Teile 21, 22 die Fügeflächenmodule 40 gleichzeitig in einer Belastungsrichtung mit einer vorgegebenen und für alle Proben im Wesentlichen gleichen Kraft belasten kann.

## Beschreibung

Die Erfindung liegt auf dem Gebiet des Fügens, insbesondere des stoffschlüssigen Fügens, und betrifft eine Vorrichtung zum gleichzeitigen Beaufschlagen einer Vielzahl von Proben mit identischem Anpressdruck ungeachtet der Höhe der Proben.

Zur Beurteilung der Eignung von Klebstoffen oder Loten für bestimmte Materialkombinationen oder zur Beurteilung von Oberflächenbehandlungen, die Klebeschritten oder Lötprozessen vorausgehen, wird üblicherweise ein Prüfstempel stirnseitig mit dem jeweiligen Substrat verklebt bzw. verlötet und nach dem Aushärten des Klebers bzw. dem Umschmelzen eines Lotdepots die Festigkeit des erzielten stoffschlüssig gefügten Verbundes bei definierter Zug- oder Scherbelastung untersucht.

Da einerseits die Dicke verschiedener Substrate, andererseits auch die Dicke einer aufgebrachten Klebstoffschicht bzw. eines Lotdepots variieren kann, z.B. in Abhängigkeit von der Viskosität, der Größe von im Kleber enthaltenen oder von in einer Lotpaste enthaltenen Partikeln oder Füllstoffen, ist die resultierende Höhe verschiedener Schichtaufbauten mit ansonsten standardisierten Prüfstempeln zusätzlich zu normalen Exemplarschwankungen gewissen Streuungen unterworfen.

Sollen nun gleichzeitig mehrere Substrate, umfassend Schichten, Beschichtungen oder Komposite, und die für sie bestimmten Prüfstempel geklebt, gelötet oder anderweitig stoffschlüssig verbunden werden, so kann es erforderlich sein, eine Vielzahl von Stapeln, umfassend ein Substrat, eine Klebstoffschicht oder ein Lotdepot und einen Prüfstempel, vor dem eigentlichen Kleben bzw. Löten über eine bestimmte Haltezeit bei definiertem Anpressdruck zu halten. Würde das unter Zuhilfenahme eines allen Stapeln gleichzeitig und gemeinsam aufgelegten Gewichts - beispielsweise einer Metallplatte - erfolgen, so wäre der jeweils resultierende Anpressdruck uneinheitlich. Damit wäre die Vergleichbarkeit der Versuchsergebnisse zur Festigkeit mit den vorstehend erwähnten Streuungen in der Probenhöhe unterschiedlicher Fügeverbindungen nicht gewährleistet.

Bekannte Lösungen, die auf der Verwendung von Andruckfedern beruhen, sind für den bezeichneten Zweck nur eingeschränkt nutzbar, da die effektive Federkonstante unterschiedlicher Federn auch bei gleicher Federgeometrie herstellungsbedingt variieren kann und zudem nur für einen engen Auslenkungsbereich gilt. Somit weicht die jeweils ausgeübte Federkraft außerhalb eines vorgegebenen Toleranzbereichs typischerweise vom Nominalwert ab.

Vor diesem Hintergrund werden eine Vorrichtung und ein Verfahren zum Aufbringen einer gerichteten Andruckkraft auf eine Vielzahl von Proben unter Tolerierung von Höhenunterschieden der einzelnen Proben vorgeschlagen. Insbesondere wird gemäß Anspruch 1 eine Vorrichtung und gemäß Anspruch 19 ein Verfahren zum gleichzeitigen Aufbringen eines vorgegebenen identischen Anpressdrucks auf eine Vielzahl von Proben unter Verwendung von standardisierten Fügeflächenmodulen vorgeschlagen, wobei ein auf die Proben ausgeübter Anpressdruck in einem ausgewählten Anpressdruckbereich unabhängig von der Probenhöhe und unabhängig von einer gewählten Umgebungstemperatur, bzw. Arbeitstemperatur ist.

In diesem Zusammenhang wird hier unter einer Probe verstanden:
- die Anordnung bzw. der Verbund eines Substrats, wobei das Substrat eine zum Kleben bestimmte Fläche umfasst, mit einem Klebflächenmodul, wobei das Klebflächenmodul eine zum Kleben bestimmte Fläche umfasst, sowie einer zwischen Substrat und Klebflächenmodul angeordneten Klebstoffschicht oder eines zwischen Substrat und Klebflächenmodul angeordneten Klebstoffreservoirs;
- die Anordnung bzw. der Verbund eines Substrats, wobei das Substrat eine zum Löten bestimmte Kontakt- oder Anschlussfläche umfasst, mit einem Lotflächenmodul, wobei das Lotflächenmodul eine zum Löten bestimmte Fläche umfasst, sowie ein zwischen Substrat und Lotfläche des Lotflächenmoduls angeordnetes Lot, Lotdepot oder Lotpaste;
- eine der vorgenannten Anordnungen oder Verbunde, wobei der jeweilige Modul auf der vom Substrat abgewandten Seite zusätzlich mit einem Massekörper verbunden ist, der für eine erste vorläufige Fixierung des jeweiligen Moduls dient.

Die Begriffe Klebflächenmodul, Lötflächenmodul und Probenträger, Prüfstempel oder Prägestempel sollen nachfolgend vereinfachend durch den Begriff Fügeflächenmodul repräsentiert sein - unabhängig davon, ob es sich bei der vorgesehenen Fügeverbindung um eine Klebeverbindung, eine Lötverbindung, eine Verbindung durch eine intermetallische Legierung, oder eine andere mit einem Phasenübergang oder einem Phasenwechsel einhergehende stoffschlüssige Verbindung handelt.

Der Begriff Probe steht dabei sowohl für einen noch ungeklebten, einen bereits geklebten, einen noch ungelöteten, einen bereits umgeschmolzenen oder gelöteten oder einen anderweitig stoffschlüssig gefügten oder zum stoffschlüssigen Fügen bestimmten Stapel. Genauso steht der Begriff Probe für eine Anordnung, umfassend ein Substrat, ein betreffendes Mittel für das stoffschlüssige Fügen - beziehungsweise ein Fügemittel oder ein Bindemittel und ein Fügeflächenmodul, wobei das Fügeflächenmodul eine erste Seite aufweist, die in Richtung zum Substrat in Kontakt mit dem Fügemittel steht.

Das Substrat kann dabei beispielsweise ein Festkörper in Form eines Materialmusters sein, ausgewählt unter einer Keramik, einem Glas, einem Metall, einer metallischen Legierung, einem Halbleiter, einem Laminat, einem Verbundwerkstoff, einem Mineral, einem Natur- oder Kunststein, einem mineralischen Werkstoff, einem Kristall, einem Harz oder einem Kunststoff und in Form eines Halbzeugs oder in Form einer Folie vorliegen.

Bedingt durch die unterschiedliche Materialstärke verschiedener Substrate, deren vorausgehende Oberflächenbehandlung oder Beschichtung bei ansonsten nahezu identischen Abmessungen der Materialmuster und/oder durch die unterschiedliche Stärke von Fügemittelschichten, z.B. Klebstoffschichten, Klebstoffdepots oder Lotdepots, können sich auch bei der Verwendung standardisierter Fügeflächenmodule identischer Bauform und Höhe jeweils unterschiedliche Probenhöhen ergeben.

Weitere Ausführungsformen, Modifikationen und Verbesserungen der vorgeschlagenen Vorrichtung und des vorgeschlagenen Verfahrens ergeben sich anhand der folgenden Beschreibung und der beigefügten Ansprüche.

Gemäß einer ersten Ausführungsform wird eine Vorrichtung zum Aufbringen einer gerichteten Andruckkraft auf eine Vielzahl von Proben vorgeschlagen, wobei ein erster Teil der Vorrichtung eine Vielzahl von Aufnahmen aufweist, die angepasst ist, eine Vielzahl von hinreichend gleichförmigen Proben geordnet aufzunehmen und ein zweiter Teil der Vorrichtung mit dem ersten Teil so verbindbar ist, dass eine Vielzahl fluidisch miteinander kommunizierender Hydraulikzylinder in einem der beiden Teile die Fügeflächenmodule gleichzeitig in einer Belastungsrichtung mit einer vorgegebenen und für alle Proben definierten und einstellbaren, sowie im Wesentlichen gleichen, Kraft belasten kann. Diese Kraft ist durch den in Hydraulikzylindern erreichten hydrostatischen Druck definiert. Aus der Kenntnis des hydrostatischen Druckes und der geometrisch definierten Kontaktfläche zwischen Substrat und Fügeflächenmodul und Anzahl der Substrate/Proben ist die Anpresskraft bzw. der jeweils realisierte Anpressdruck bestimmbar.

Vorteile dieser Ausführungsform bestehen in der Zuverlässigkeit von Befunden, die an Proben erhoben werden, welche unter Verwendung dieser Vorrichtung über eine definierte Zeit mit einer definierten Kraft, gegebenenfalls einem Kraftverlauf beaufschlagt werden sollen. Die vorgeschlagene Vorrichtung ist vorteilhafterweise so kompakt, dass sie gleichzeitig mehrere Proben aufnehmen kann und damit die Erhebung von Befunden zu mehreren Proben unterschiedlicher Art aber ähnlicher Geometrie parallel gestattet.

Derartige Befunde betreffen beispielsweise die Festigkeit von Klebeverbindungen zwischen Fügeflächenmodul und Probe, insbesondere die Vergleichbarkeit von dabei erhaltenen Ergebnissen zur Zuverlässigkeit von Klebeverbindungen oder zu deren Optimierung. Ein weiterer Vorteil besteht im erhöhten Probendurchsatz. Zur Sicherung der Vergleichbarkeit von Testergebnissen unterschiedlicher Testläufe ist lediglich ein jeweils identischer hydrostatischer Druck der Hydraulikflüssigkeit der miteinander fluidisch kommunizierenden Hydraulikzylinder zu gewährleisten. Weitere Vorteile ergeben sich bei der Verwendung einer angepassten Druck-Regeltechnik bzw. angepasster Hydraulikflüssigkeiten.

Gemäß einer zweiten Ausführungsform wird eine Vorrichtung zum Aufbringen einer gerichteten Andruckkraft auf eine Vielzahl von Proben vorgeschlagen, wobei der erste und der zweite Teil durch zumindest ein mit dem jeweiligen Teil verbundenes Halterungselement miteinander verbindbar oder verbunden sind. Dabei weisen die jeweiligen Halterungselemente zueinander korrespondierende Formen auf, bzw. weist das Halterungselement des ersten Teils eine zum Halterungselement des zweiten Teils korrespondierende Form auf, womit auch das Halterungselement des zweiten Teils eine zum Halterungselement des ersten Teils korrespondierende Form hat.

Vorteile dieser Ausführungsform bestehen in der Möglichkeit, die Vorrichtung einfach und leicht mit Proben bestücken zu können, die Proben leicht und schnell wieder entnehmen zu können, und die Vorrichtung nach einem durchgeführten Versuch ebenso leicht wieder auseinander nehmen zu können. Eventuell während des Versuchs aus Probenstapeln ausgetretene und ausgehärtete Kleberreste können leicht entfernt werden, da die Aufnahme der Fügeflächenmodul gut zugänglich ist.

Gemäß einer dritten Ausführungsform wird eine Vorrichtung zum Aufbringen einer gerichteten Andruckkraft auf eine Vielzahl von Proben vorgeschlagen, wobei der erste Teil der Vorrichtung mit dem zweiten Teil der Vorrichtung durch Halterungselemente zueinander korrespondierender Formen über ein Scharnier, über ein Gewinde, über einen Bajonettverschluss, über einen Steckdrehanker, über eine Nut/ Nutenstein-Kupplung oder nach dem Schlüssel-Schloss-Prinzip miteinander verbindbar sind.

Vorteile dieser Ausführungsform bestehen in der Möglichkeit, die Vorrichtung einfach und schnell zusammenbauen zu können und sie nach einem Versuch ebenso leicht wieder auseinander nehmen zu können.

Gemäß einer vierten Ausführungsform wird eine Vorrichtung zum Aufbringen einer gerichteten Andruckkraft auf eine Vielzahl von Proben vorgeschlagen, wobei die Aufnahmen zumindest teilweise in einem identischen radialen Abstand um das Halterungselement herum angeordnet sind.

Das gestattet die kompakte Anordnung zahlreicher Proben in einer einzigen Vorrichtung und erhöht den erreichbaren Probendurchsatz je Andruckvorgang.

Gemäß einer fünften Ausführungsform wird eine Vorrichtung zum Aufbringen einer gerichteten Andruckkraft auf eine Vielzahl von Proben vorgeschlagen, wobei ein externer hydraulischer Antrieb an den Teil der Vorrichtung anschließbar ist, in dem die Hydraulikzylinder angeordnet sind, so dass die Hydraulikzylinder über ein gemeinsames Hydraulikreservoir mit einem externen hydraulischen Antrieb bewegt werden können.

Damit können die Vorteile einer zentralen Versuchsdurchführung erschlossen werden. Insbesondere können mit einem gesonderten Hydraulikzylinder bzw. einer externen hydraulischen Druckvorrichtung Drucke einer Hydraulikflüssigkeit aufgebaut werden, die mit einem direkt in der Vorrichtung angeordneten zentralen Hydraulikreservoir nicht ohne weiteres erreichbar sind.

Gemäß einer sechsten Ausführungsform wird eine Vorrichtung zum Aufbringen einer gerichteten Andruckkraft auf eine Vielzahl von Proben vorgeschlagen, wobei die Vorrichtung so angepasst ist, dass die in einem der beiden Teile angeordneten Hydraulikzylinder gemeinsam durch einen unmittelbar im selben Teil beweglich zentral angeordneten Hydraulikzylinder mit hydrostatischem Druck beaufschlagbar sind.

Vorteile dieser Ausführungsform ergeben sich aus der Möglichkeit einer dezentralen Versuchsdurchführung und dem Wegfall notwendiger externer Zusatzgeräte zum Betreiben der Hydraulikzylinder. Ein besonderer Vorteil dieser Ausführungsform besteht darin, dass die Vorrichtung kompakt und nicht allzu schwer ist, sodass sie im Routinebetrieb eines Prüflabors noch problemlos von einer Person nach Bedarf transportiert und benutzt werden kann. Weiterhin ist die Verwendung dieser Vorrichtung vorteilhafterweise nicht an ein Labor gebunden. Die Vorrichtung kann somit ggf. auch mobil nach Bedarf und vor Ort eingesetzt werden.

Gemäß einer siebenten Ausführungsform wird eine Vorrichtung zum Aufbringen einer gerichteten Andruckkraft auf eine Vielzahl von Proben vorgeschlagen, umfassend eine schraubbare Spannvorrichtung, die so angepasst ist, dass ein reproduzierbares Einstellen des hydrostatischen Drucks und/oder der Andruckkraft erfolgen kann. Das ermöglicht vorteilhafterweise die Kalibrierung der Vorrichtung und das standardisierte Herstellen von Fügeverbindungen.

Gemäß einer achten Ausführungsform wird eine Vorrichtung zum Aufbringen einer gerichteten Andruckkraft auf eine Vielzahl von Proben vorgeschlagen, wobei die schraubbare Spannvorrichtung eine Markierung oder eine Skale aufweist, und der erste Teil oder der zweite Teil eine zur Markierung oder zur Skale der schraubbaren Spannvorrichtung korrespondierende Markierung oder Skale umfasst, die so eingerichtet ist, dass eine diskrete Stellung der schraubbaren Spannvorrichtung reproduzierbar einstellbar ist. Daraus ergeben sich Vorteile für die standardisierte Durchführung von materialwissenschaftlichen Fragestellungen, insbesondere für die Reproduzierbarkeit dabei eingestellter Parameter.

Gemäß einer neunten Ausführungsform wird eine Vorrichtung zum Aufbringen einer gerichteten Andruckkraft auf eine Vielzahl von Proben vorgeschlagen, umfassend eine Feinmessschraube oder eine Mikrometerschraube, wobei die vorgeschlagene schraubbare Spannvorrichtung eine Feinmessschraube oder eine Mikrometerschraube umfasst, und wobei die schraubbare Spannvorrichtung vorzugsweise ein Präzisionsgewinde aufweist, sodass auf einer Skale, die parallel zu einer Achse der Vorrichtung angeordnet ist, die Größe eines Vorschubs des zentralen Hydraulikzylinders bzw. der Spannvorrichtung des Hydraulikzylinders abgelesen werden kann. Dabei ist die ablesbare Größe typischerweise in Ganghöhen des Schraubgewindes der schraubbaren Spannvorrichtung, typischerweise als ganze oder halbe Millimeter ausgedrückt, ablesbar. Eine zweite Skale entlang eines Umfangs des betreffenden, mit der schraubbaren Spannvorrichtung versehenen ersten oder zweiten Teils der vorgeschlagenen Vorrichtung ist eingerichtet, sodass eine Ablesung eines Anteils einer ganzen Ganghöhe, der nur einen Bruchteil einer Ganghöhe beziehungsweise einer Gewindesteigung ausmacht, ermöglicht.

Vorteile dieser Ausführungsform ergeben sich aus der Messgenauigkeit einer Länge oder eines Weges entsprechender feinmechanischer Präzisionsmessschrauben, die häufig auch als Mikrometerschrauben, als Feinmessschrauben oder als feinmechanische Vortriebe bezeichnet werden. Insbesondere ermöglicht die Präzisionsmessschraube eine präzise Dosierung des Anpressdrucks.

Gemäß einer zehnten Ausführungsform wird eine Vorrichtung vorgeschlagen, deren zentral angeordneter Hydraulikzylinder einen zentralen Druckkolben aufweist.

Das bietet den Vorteil, somit die über den zentral angeordneten Hydraulikzylinder fluidisch miteinander kommunizierenden individuellen Hydraulikzylinder über den bezeichneten zentralen Druckkolben mit Druck zu beaufschlagen. Auf Grund bekannter physikalischer Gegebenheiten ist der über die Hydraulikflüssigkeit auf die individuellen Hydraulikzylinder ausgeübte Druck für alle kommunizierenden Hydraulikzylinder identisch. Jedoch können Abweichungen von einem voreingestellten Druck auftreten, wenn sich - bedingt durch eine Erhöhung der Umgebungstemperatur - das Volumen der im Hydraulikzylinder befindlichen Flüssigkeit (Arbeitsflüssigkeit) ändert. Die erhöhte Umgebungstemperatur entspricht dabei beispielsweise einer Temperatur zur fachgerechten Verarbeitung eines Klebstoffs (Klebstoffverarbeitungstemperatur) in einem Ofen oder einer Klimakammer. Die zumeist vom Hersteller angegebene Klebstoffverarbeitungstemperatur sichert beispielsweise das Aushärten oder Abbinden des Klebstoffs und damit das Erreichen einer bestimmungsgemäßen Festigkeit der Klebeverbindung. Ebenso kann die erhöhte Umgebungstemperatur so gewählt sein, dass sie der Umschmelztemperatur eines Lotes entspricht. Das Erreichen der Umschmelztemperatur sichert ein vollständiges Benetzen der mit dem Lotdepot in Kontakt stehenden Flächen und sichert eine feste metallische Verbindung zwischen dem Lot und den Fügeflächen. Insgesamt ermöglicht die vorgeschlagene Vorrichtung eine standardisierte Versuchsdurchführung. Sie verbessert die Zuverlässigkeit der erhobenen Befunde.

Gemäß einer elften Ausführungsform wird deshalb eine Vorrichtung vorgeschlagen, die weiterhin zumindest einen Hebelarm mit einem Gewicht umfasst, wobei das Gewicht über die Hebelwirkung Druck auf den zentralen Druckkolben ausübt.

Diese Ausführungsform bietet beispielsweise den Vorteil, dass die auf den zentralen Hydraulikzylinder ausgeübte Kraft durch die Wahl des Hebels (Verhältnis von Lastarm zu Kraftarm) und die Masse des gewählten Gewichtes einstellbar ist. Es versteht sich von selbst, dass diese Vorrichtung eine von einer externen Hydraulikpumpe unabhängige Einsetzbarkeit und die nahezu uneingeschränkte Mobilität der Vorrichtung ermöglicht. Beispielsweise wird das Gewicht am Hebelarm (Lastarm) angehangen oder anderweitig befestigt. Ein wesentlicher Vorteil dieser Ausführungsform besteht darin, dass eine über die im zentralen Hydraulikzylinder bzw. in den miteinander fluidisch kommunizierenden Hydraulikzylindern auf eine Probe ausgeübte Kraft unabhängig von einer etwaigen Volumenzunahme dieser Flüssigkeit ist. Somit kann gewährleistet werden, dass für alle Proben in der Halterung die vorgegebene Andruckkraft unabhängig von der zur korrekten Versuchsdurchführung jeweils eingestellten Temperatur (Umgebungstemperatur) ist. Wie erläutert, wird die Umgebungstemperatur bzw. die Temperatur der Vorrichtung selbst so eingestellt, dass das untersuchte Fügemittel oder Bindemittel, beispielsweise ein Klebstoff oder ein Lot, die beabsichtigte Haltekraft bzw. Festigkeit entwickelt.

Gemäß einer zwölften Ausführungsform wird eine Vorrichtung vorgeschlagen, die zwei Hebelarme umfasst, wobei die beiden Hebelarme einander gegenüberliegend angeordnet sind, sodass sie jeweils über die Hebelwirkung mit einem an jedem Hebelarm befestigten Gewicht gemeinsam Druck auf den zentralen Druckkolben ausüben.

Diese Ausführungsform bietet gegenüber einer mit nur einem Hebelarm ausgestatteten Vorrichtung beispielsweise den zusätzlichen Vorteil einer erhöhten Standfestigkeit bei identischem oder höheren über die Masse der Gewichte einstellbarem Druck.

Gemäß einer dreizehnten Ausführungsform wird eine Vorrichtung vorgeschlagen, wobei das Gewicht aus Teilgewichten oder Gewichtssegmenten besteht, die aneinander bzw. zueinander befestigbar sind.

Diese Ausführung des Gewichts bietet den Vorteil, in Abhängigkeit der jeweils miteinander kombinierten bzw. der jeweils miteinander verbundenen Teilgewichte bzw. Gewichtssegmente einen unterschiedlichen Anpressdruck zu erreichen, sowie rasch unterschiedliche Anpressdrucke realisieren zu können. Alternativ können mit dem gleichen Ziel auch verschiedene Gewichte an unterschiedlichen Positionen des Hebelarms (Lastarms) befestigt werden.

Gemäß einer vierzehnten Ausführungsform wird eine Vorrichtung vorgeschlagen, wobei die Gesamtmasse eines am Hebelarm befestigten Gewichtes im Bereich zwischen 1 kg und 10 kg liegt und einzelne Teilgewichte oder Gewichtssegmente Massen von 100 g bis zu 5 kg, vorzugsweise Massen von 500 g bis 2 kg aufweisen.

Daraus ergibt sich der Vorteil, dass ohne aufwendige Umrüstungen stufenweise ein unterschiedlicher Anpressdruck der Proben erreicht werden kann.

Gemäß einer fünfzehnten Ausführungsform wird eine Vorrichtung vorgeschlagen, die weiterhin eine verschließbare Öffnung zum Befüllen des zentral angeordneten Hydraulikzylinders mit einer Flüssigkeit aufweist, wobei diese Öffnung auch zum Entleeren des Hydraulikzylinders verwendet werden kann. Gemäß einer Variation dieser Ausführungsform können ebenso gesonderte Befüll- und Auslass-Öffnungen vorgesehen sein.

Das bietet den Vorteil, ohne aufwendige Umrüstungen eine Befüllung des Hydrauliksystems der Vorrichtung mit unterschiedlichen Arbeitflüssigkeiten vornehmen zu können. Diese unterschiedlichen Flüssigkeiten können vorteilhafterweise in Abhängigkeit vom beabsichtigten Temperaturbereich für durchzuführenden Messungen gewählt werden.

Gemäß einer sechzehnten Ausführungsform wird eine Vorrichtung zum Aufbringen einer gerichteten Andruckkraft auf eine Vielzahl von Proben vorgeschlagen, wobei eine im Hydraulikzylinder befindliche Flüssigkeit nicht kompressibel und in einem für die Aushärtung des Klebers bevorzugten Temperaturbereich stabil ist. Vorteilhafterweise ist diese Flüssigkeit ausgewählt unter: Wasser, einer wässrigen Lösung, einem Hydrauliköl, einem Silikonöl, einer Wärmeträgerflüssigkeit aus dem Anwendungsbereich der Solarthermie. Die sich daraus ergebenden Vorteile umfassen einerseits Aspekte der Zuverlässigkeit der vorgeschlagenen Vorrichtung, da eine nicht kompressible Flüssigkeit die im gewählten Temperaturbereich stabil ist bevorzugt als Hydraulikflüssigkeit in Betracht kommt. Andererseits sind beispielsweise die leichte Verfügbarkeit, Aspekte des Arbeitsschutzes, des Umweltschutzes sowie geringe Kosten von Vorteil.

Über den zentralen Hydraulikzylinder kann der applizierte Druck gleichmäßig auf die miteinander kommunizierenden Hydraulikzylinder der einzelnen Andruckvorrichtungen übertragen werden, wobei in Abhängigkeit von der auf die Proben aufgebrachten Last, der jeweils über die Fügeflächenmodule auf den Arealen des Substrates lastende Druck leicht reguliert und gezielt eingestellt werden kann.

Gemäß einer siebzehnten Ausführungsform wird eine Vorrichtung vorgeschlagen, wobei ein Abstand zwischen einem Druckpunkt eines Hydraulikzylinders und einer Andruckfläche durch eine Arretierungsmutter eingestellt oder festgestellt werden kann. Vorteile ergeben sich aus der Verwendbarkeit von Hydraulikzylindern mit geringem Hub und einem damit erreichbaren geringen Volumen der erforderlichen Hydraulikflüssigkeit sowie einer daraus resultierenden kompakten Bauweise der Vorrichtung.

Gemäß einer achtzehnten Ausführungsform wird eine Vorrichtung zum Aufbringen einer gerichteten Andruckkraft auf eine Vielzahl von Proben vorgeschlagen, die weiterhin eine Druckanzeigevorrichtung zur Anzeige einer Anpresskraft oder eines hydrostatischen Druckes umfasst. Vorteile ergeben sich aus der Verwendbarkeit eines Druckmesskopfes oder eines Sensors zur automatischen Datenerfassung und Datenspeicherung sowie aus der Möglichkeit, den aufgebrachten Druck zu messen oder über einen ggf. zusätzlichen Regelkreis zu kontrollieren. Dafür kann eine zentrale Signalerfassungs- und Signalverarbeitungseinheit vorgesehen sein.

Gemäß einer neunzehnten Ausführungsform wird eine Vorrichtung zum Aufbringen einer gerichteten Andruckkraft auf eine Vielzahl von Proben vorgeschlagen, die zusätzlich Arretierungsmittel oder eine vorzugsweise abnehmbare Haltevorrichtung aufweist, die eine verkippungsfreie Aufnahme und/oder den Transport der Vorrichtung mit einem angepassten Haltemittel erlaubt.

Da zum Auftragen des Klebers beispielsweise Dosiervorrichtungen bzw. Dosier-Stationen genutzt werden, ermöglicht die vorhandene Haltevorrichtung eine erleichterte Handhabbarkeit und den Transport der mit Kleber(n) oder Klebern und Proben bestückten Vorrichtungsteile von und zur Dosiervorrichtung oder -Station.

Gemäß einer weiteren Ausführungsform wird eine Vorrichtung gemäß zumindest einer der vorstehenden Ausführungsformen vorgeschlagen, die weiterhin zumindest ein Heizelement zum individuellen Heizen eines in einer Probeaufnahme aufgenommenen Fügeflächenmoduls und/oder eines Fügemittels im Kontakt mit dem Fügeflächenmodul, bzw. eine Fügemittels zwischen dem betreffenden Fügeflächenmodul und dem Substrat umfasst.

Vorteile ergeben sich daraus, dass unterschiedliche Proben mit individuell unterschiedlichen Temperaturen oder Temperaturverläufen beaufschlagt werden können. Typischerweise ist das Heizelement in unmittelbarer Nähe zur jeweiligen Probenaufnahme angeordnet. So kann für die jeweilige Probe über eine vorbestimmte Zeitdauer eine individuelle Temperatur der Probe eingestellt werden.

Gemäß einer Ausführungsform des Heizelements ist jenes ausgewählt unter einer Widerstandsheizung und einer Induktionsspule.

Vorteile ergeben sich daraus, dass sich die Heizleistung dieser Heizelemente genau einstellen und dosieren lässt. Beispielsweise kann mit einer Induktionsspule die induktive Erwärmung mittels Wirbelstrom erreicht werden. Andererseits kann mit einer geeignet angesteuerten Spule ein mit ferromagnetischen Partikeln gefüllter Klebstoff selektiv erwärmt werden.

Gemäß einer weiteren Ausführungsform wird ein Verfahren zum gleichzeitigen Aufbringen eines vorgegebenen Anpressdrucks auf eine Vielzahl von Fügeflächenmodulen vorgeschlagen, wobei der auf die Proben ausgeübte Anpressdruck unabhängig von der jeweiligen Höhe der Proben ist, umfassend:
- das Anordnen der mit Proben bestückten Fügeflächenmodul in gesonderten Aufnahmen eines Probenträgers derart, dass jeweils eine erste Seite des Fügeflächenmoduls im Wesentlichen parallel zum Substrat ausgerichtet ist;
- das Verbinden einer Abdeckplatte mit dem Probenträger derart, dass die Abdeckplatte in einem ersten Abstand zum Probenträger weitestgehend parallel zum Probenträger ausgerichtet ist, wobei der erste Abstand kleiner ist, als ein mittlerer Hub der Hydraulikzylinder, die entweder im Probenträger unter den Proben oder in der Abdeckplatte, frontal zu den Stirnflächen der Proben angeordnet sind;
- das gleichzeitige Betreiben der Hydraulikzylinder und das Beaufschlagen der Proben mit einem vorgegebenen Anpressdruck entlang oder parallel zu einer Achse, die orthogonal zu der von dem Probenträger vorgegebenen Ebene verläuft;
- das Entnehmen der Proben.

Vorteile des vorgeschlagenen Verfahrens bestehen darin, dass universelle Fügeflächenmodule, beispielsweise mit einem Gewindestift versehene Fügeflächenmodule, verwendet werden können, um die Festigkeit einer Fügeverbindung in einer angepassten Prüfvorrichtung unter Standardbedingungen geprüft werden können, nachdem jeweils interessierende Materialpaarungen (Proben) jeweils in Form eines Substrates, das unter Verwendung eines Fügemittels mit einem standardisierten Fügeflächenmodul stoffschlüssig verbunden ist.

Dabei kann das Verbindungsmittel beispielsweise ausgewählt sein unter einem Klebstoff, einem Kleber, einem Zement, einem Lot, einem metallischen Lot, einem Glaslot, oder einer Lotpaste oder entsprechender Reservoire, die entweder beim Aushärten, beim Abbinden, beim Reagieren, oder beim Umschmelzen eine stoffschlüssige Verbindung zwischen einem Substrat und einer ersten Seite eines Fügeflächenmoduls in Form eines ausgehärteten Klebstoffs oder Klebers, eines abgebundenen Zements, eines umgeschmolzenen Lots oder einer Legierung mit einer intermetallischen Phase, eines Polymers, eines Harzes oder anderer dem Fachmann bekannter homogener oder heterogener Feststoffe ausbilden.

Der in eine entsprechende Ausnehmung, beispielsweise eine Bohrung mit Gewinde des Massekörpers eingefügte Stift des Fügeflächenmoduls sichert eine stabile Position des Probestapels gegenüber einem korrespondierenden Hydraulikzylinder des zweiten Teils der Vorrichtung, wenn sich die Hydraulikzylinder im zweiten Teil der Vorrichtung befinden.

Weitere Vorteile dieses Verfahrens bestehen insbesondere in der Vergleichbarkeit erhaltener Ergebnisse und abgeleiteter Befunde beispielsweise zur Eignung eines Klebers, einer Oberflächenvorbehandlung oder einer Haltezeit und in der Steigerung des Probendurchsatzes.

Gemäß einer weiteren Ausführungsform wird ein Verfahren zum gleichzeitigen Aufbringen eines vorgegebenen Anpressdrucks auf eine Vielzahl von Proben bzw. Probestapeln unterschiedlicher Höhe vorgeschlagen, das weiterhin das Aufbringen zumindest einer Schicht eines Klebers und zumindest einer Probe auf eine erste Seite eines Fügeflächenmoduls umfasst.

Vorteile dieser Ausführungsform bestehen darin, dass bei einem gegebenen hydrostatischen Druck der Hydraulikflüssigkeit der auf die Probe bzw. den Probestapel aufgebrachte Anpressdruck allein durch die Fläche des (Stift-) Fügeflächenmoduls vorgegeben wird und nicht durch die Höhe der Schicht aus Kleber und Substrat beeinflusst wird, wie das bei bekannten Federanpressvorrichtungen der Fall sein kann.

Gemäß einer weiteren Ausführungsform wird ein Verfahren zum gleichzeitigen Aufbringen eines vorgegebenen Anpressdrucks auf eine Vielzahl von Proben unterschiedlicher Höhe vorgeschlagen, das weiterhin das Einstellen einer vorgegebenen Temperatur oder eines vorgegebenen Temperaturverlaufes bzw. das Temperieren der Vorrichtung umfasst.

Vorteile bestehen insbesondere darin, dass thermohärtende Klebstoffe unter definierten Bedingungen geprüft werden können.

Gemäß einer weiteren Ausführungsform wird ein Verfahren zum gleichzeitigen Aufbringen eines vorgegebenen Anpressdrucks auf eine Vielzahl von Proben unterschiedlicher Höhe vorgeschlagen, wobei das Temperieren im Bereich von - 40 bis + 500 °C erfolgt.

Vorteile dieser Ausführungsform bestehen insbesondere darin, dass ein Vergleich von Ergebnissen möglich ist, die über einen weiten Temperaturbereich erhalten wurden. Da die Vorrichtung auf Grund ihrer robusten Bauweise vollständig aus metallischen oder hochtemperaturbeständigen Materialien gefertigt werden kann, ist die TemperaturBelastbarkeit lediglich durch die Hitzebeständigkeit bzw. das thermische Verhalten der Hydraulikflüssigkeit begrenzt. Das schafft einen weiteren Arbeitsbereich, als er mit Hilfe herkömmlicher Vorrichtungen erreichbar ist.

Gemäß einer weiteren Ausführungsform des vorgeschlagenen Verfahrens erfolgt weiterhin ein Temperieren zumindest einer Probenaufnahme, bevorzugt ein Heizen mit einem Heizelement.

Vorteile dieser Ausführungsform ergeben sich aus der Möglichkeit, in einer Probenhaltevorrichtung identische Materialkombinationen, umfassend jeweils eine auf die Fügefläche eines Fügeflächenmoduls aufgetragene Schicht eines Fügemittels, beispielsweise eines Klebstoffs und eines im Kontakt mit dieser Schicht stehenden Substrates (bzw. Probe 50) bei unterschiedlichen Temperaturen aber jeweils identischem Anpressdruck halten zu können. Das ermöglicht einen verlässlichen Vergleich der ermittelten Messwerte.

Gemäß einer weiteren Ausführungsform des Verfahrens umfasst das Verfahren das individuelle Messen der Temperatur, die an einer Probenaufnahme effektiv erreicht wird mit einem individuellen Messfühler.

Vorteile dieser Ausführungsform ergeben sich aus der gesteigerten Zuverlässigkeit der Messergebnisse und darauf basierender Befunde sowie der Reproduzierbarkeit der Untersuchungen.

Die vorstehend beschriebenen Ausführungsformen können beliebig miteinander kombiniert werden. Dabei können mehrere Ausführungsformen ausgewählt und miteinander kombiniert werden. Ebenso können alle Ausführungsformen unter Weglassen einzelner oder mehrerer Ausführungsformen oder Weglassen spezifischer Merkmale miteinander kombiniert werden.

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu. Gleiche Bezugszeichen bezeichnen entsprechend ähnliche Teile.

Fig. 1 zeigt ein Substrat, einen standardisierten Fügeflächenmodul, den damit verschraubbaren Massekörper und eine Führungshülse.

Fig. 2 zeigt die Ansicht eines Längsschnittes durch einen Ausschnitt eines Probentellers, der mit zu fügenden bzw. zu klebenden Proben in Führungshülsen bestückt ist.

Fig. 3 zeigt eine Ausführungsform der vorgeschlagenen Vorrichtung, die angepasst ist zur Aufnahme mit Hilfe von abnehmbaren Greifarmen.

Fig. 4 zeigt eine Ausführungsform der Vorrichtung mit einer Skalenanzeige.

Fig. 5 zeigt einen Auschnitt einer Ausführungsform mit einer Spannvorrichtung in Form einer Feinmessschraube bzw. Mikrometerschraube.

Fig. 6 zeigt einen als Probenteller ausgeführten ersten Teil der Vorrichtung, der in entsprechenden Aufnahmen mit Proben in Führungshülsen bestückt ist.

Fig. 7 zeigt eine Ausführungsform des mit Hydraulikzylindern und einem zentralen Hydraulikzylinder (nicht sichtbar) ausgestatteten Teils der Vorrichtung bei abgenommenem Andruckmechanismus.

Fig. 8 zeigt die Frontalansicht einer Ausführungsform der Vorrichtung mit einem Hebelmechanismus zum Ausgleich von Volumenänderungen eines hydraulischen Arbeitsmediums beim Heizen.

Fig. 9 zeigt die Frontalansicht der Ausführungsform der Vorrichtung mit einem Hebelmechanismus zum Ausgleich von Volumenänderungen eines hydraulischen Arbeitsmediums beim Heizen im angehobenen Zustand, d.h. bei einem durch Ausdehnung vergrößerten Volumen der Arbeitsflüssigkeit im hydraulischen System der Probenhalterung (leicht übertrieben dargestellt).

Fig. 10 zeigt eine Seitenansicht der Ausführungsform gemäß Fig. 8.

Fig. 11 zeigt eine perspektivische Ansicht dieser Ausführungsform in Frontalansicht.

Fig. 12 zeigt eine perspektivische Ansicht dieser Ausführungsform von der Rückseite.

Die vorgeschlagene Vorrichtung 1, 1a umfasst im Wesentlichen zwei Teile 21, 22, wobei ein erstes 21, in den Figuren als unteres Teil 21 dargestellter Teil 21 tablett- oder tellerartig ausgebildet ist und zur Aufnahme einer Vielzahl von Substraten 50 bzw. von mit Substraten 50 oder Proben und zugehörigen Führungshülsen 24 dient. Der zweite Teil 22 deckt den ersten Teil 21 zumindest teilweise so ab, dass zentralsymmetrisch gegenüber jeder mit Probe und Führungshülse 24 versehenen Probenaufnahme 21a ein in einer feststehenden Führung 31 laufender Hydraulikzylinder 25 bzw. dessen Druckpunkt 30 angeordnet wird. Beide Teile 21, 22 sind lösbar miteinander verbunden.

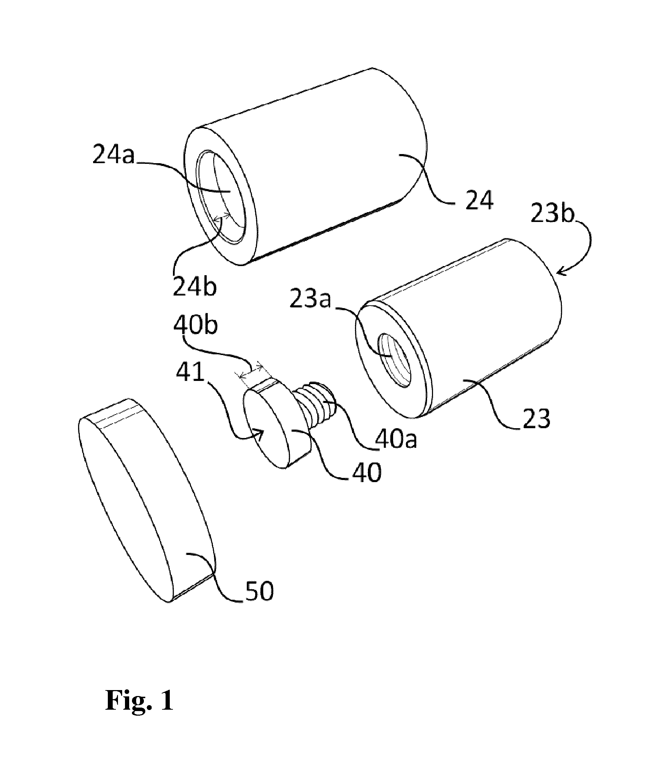

Dabei zeigt Fig. 1 beispielhaft die geometrischen Verhältnisse eines hier scheibenförmigen Substrates 50, das auch drei-, vier- oder mehreckig sein kann, in jedem Fall aber vorteilhafterweise Flächen aufweist, die zueinander planparallel sind. Ebenso kann es sich beim Substrat 50 um ein Halbzeug handeln, in das ein kleineres Objekt mit Hilfe eines angepassten, hier nicht detailliert gezeigten, Stempels 40 eingepresst werden soll, oder das mit Hilfe eines angepassten, hier nicht detailliert gezeigten, Prägestempels 40 mit einer Einprägung versehen werden soll. In einem solchen Fall kann auf die Planparallelität mit Hilfe geeigneter angepasster Aufnahmen 21a oder Einsätzen für diese, hier nicht gezeigt, verzichtet werden.

Gemäß typischen Ausführungsformen der vorgeschlagenen Vorrichtung sitzt einer der Flächen des Substrates ein standardisiertes Fügeflächenmodul 40 mit seiner ersten Seite 41 auf. Zur vorläufigen Fixierung des standardisierten Fügeflächenmoduls 40 auf einer Fügemittelschicht - beispielsweise einem Klebstoff, oder einem Lotpastendepot, die einseitig auf das Substrat 50 aufgebracht sind, kann das Fügeflächenmodul in einen Massekörper 23 eingeschraubt sein. Der Massekörper kann aus einem Material besonders hoher Dichte, beispielsweise aus einer Wolfram-Kupfer-Verbindung oder aus einer geeigneten Schwermetalllegierung gefertigt sein.

Typischerweise wird der Massekörper zur Lagefixierung von einer auf Passung gefertigten Führungshülse 24 exakt senkrecht auf der mit Fügemittel versehenen Substratoberfläche gehalten. Dazu kann der Massekörper 23 vor oder nach dem Verschrauben mit dem Fügeflächenmodul 40 in die Führungshülse 24 so eingesetzt werden, dass ein vorderes Ende des Massekörpers 23, das mit einem zum Außengewinde 40a des Fügeflächenmoduls 40 passenden Innengewinde 23a versehene ist, zu der mit einer verengten Durchgangsöffnung 24a versehenen Seite der Führungshülse 24 weist. Die Tiefe der Verengung der verengten Durchgangsöffnung bzw. die Wandstärke 24b der verengten Durchgangsöffnung 24a ist so auf die Höhe 40b des Fügeflächenmoduls 40 - ohne den mit einem Gewinde versehenen Stift - abgestimmt, dass die erstgenannte geringer als die letztgenannte ist. Damit wird erreicht, dass ein auf ein Substrat 50 aufgesetzter Fügeflächenmodul noch vor dem Anpressen mit Hilfe der Vorrichtung 1, 1a in einer zur Substratoberfläche exakt senkrechten Position stabilisiert wird. Somit fungiert diese Verengung als Widerlager für das Substrat/Probe. Das Fügeflächenmodul selbst ist mit deutlichem Spiel durchsteckbar, sodass beispielsweise auch im Fall austretenden Klebstoffs nicht alles miteinander verklebt.

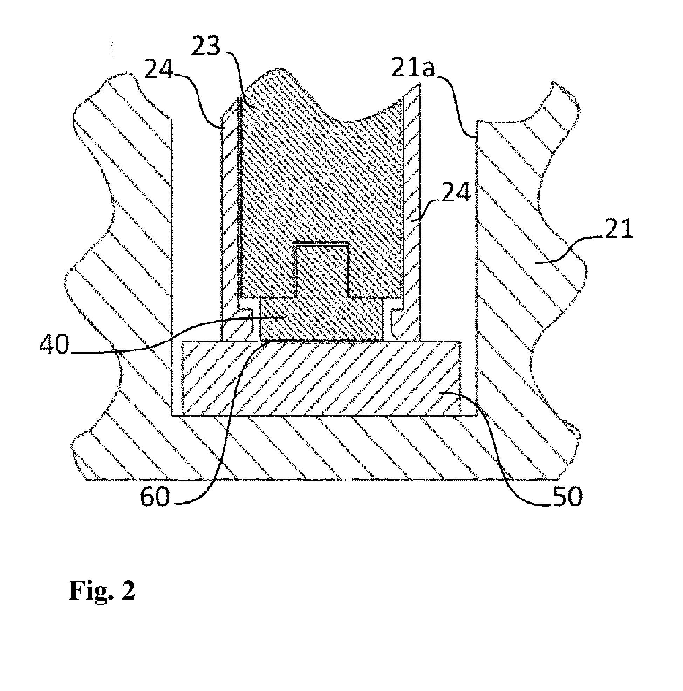

Fig. 2 zeigt das im Detail am Beispiel eines bereits in der Aufnahme 21a eines als Probenteller bzw. Unterteil dienenden ersten Teils 21 der Vorrichtung 1, 1a.

Insbesondere zeigt Fig. 2 das am Boden der Aufnahme 21a des ersten Teils 21 liegende Substrat 50. Das Substrat ist mit einem Fügemittel, beispielsweise einem Kleber, versehen.

Gemäß beispielhafter Ausführungsformen kann ein zunächst lediglich mit Substraten bestücktes erstes Teil 21 der Vorrichtung 1, 1a mit Hilfe einer Dosiervorrichtung, einer Pipettiervorrichtung oder eines Druckerkopfes einer Dosier-, Pipettier- bzw. Druckerstation mit einer vorbestimmten Menge des Fügemittels 60 - beispielsweise einem Lotpastendepot, einem Lotkugeldepot, einem Kleber oder einem Raster von Tröpfchen der Komponenten eines reaktiven Klebstoffgemischs versehen werden.

Ebenso aber kann der auf Passung in der Führungshülse 25 frei laufende Massekörper 23 mit dem Fügeflächenmodul 40 auf ein Fügemittel 60 aufgesetzt sein. Die Führungshülse 25 sitzt mit ihrer verengten Durchgangsöffnung 24a unmittelbar auf dem nackten Substrat 50 auf. Der Durchmesser der verengten Durchgangsöffnung 24a kann zur Vermeidung eines Kontakts mit dem Fügemittel 60 weiter sein, als der Durchmesser des Fügeflächenmoduls 40. Alternativ oder zusätzlich kann ein innerer vorderer Rand der verengten Durchgangsöffnung abgeschrägt oder gerundet sein.

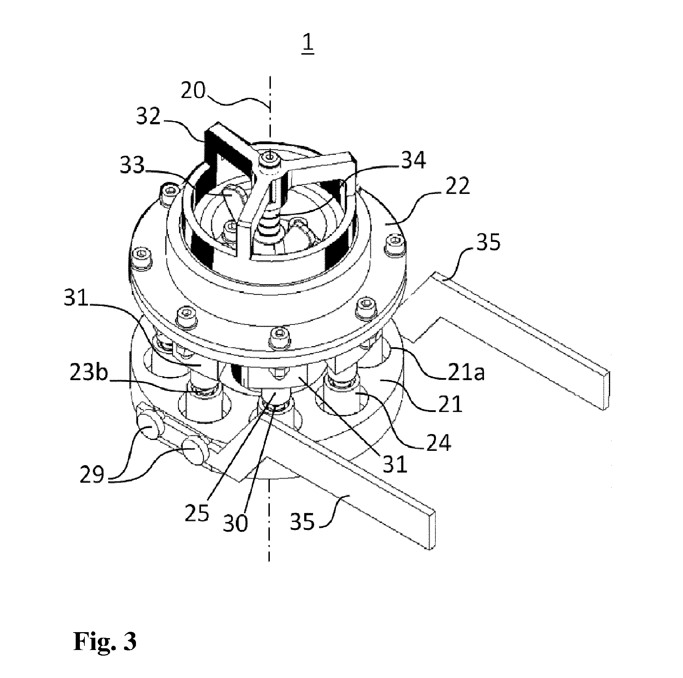

Fig. 3 zeigt eine beispielhafte Ausführungsform 1 der Vorrichtung mit symmetrisch zu einer Achse 20 angeordneten Arretierungmitteln 29 bzw. Haltemitteln 29 in zusammengebautem Zustand. Dabei sind die Aufnahmen 21a des als Probenteller dienenden unteren bzw. ersten Teils 21 der Vorrichtung 1 mit von Führungshülsen 24 stabilisierten Proben bestückt. In den Führungshülsen sind die in Richtung der Andruckpunkte 30 von Hydraulikzylindern 25 weisenden Andruckflächen 23b der Massekörper 23 erkennbar. Die Hydraulikzylinder 31 umfassen typischerweise jeweils einen, in einer feststehenden Führung 31 laufenden Hydraulikzylinder 25 mit zentralem Druckpunkt 30, wobei in Fig. 3 nur die äußere Kontur des Andruckpunktes 30 erkennbar ist.

Eine auf einer zentralen Gewindestange 34 schraubbare Flügelmutter 33 ist eingerichtet, den zweiten Teil 22 der Vorrichtung 1, 1a probenoberflächennah vor der höchsten Probe im unteren ersten Teil 21 der Vorrichtung abzusenken und zu arretieren.

Der hydrostatische Druck in einem zentralen, mit allen Druckpunkte 30 aufweisenden Hydraulikzylindern 25 fluidisch verbundenen Flüssigkeitsreservoir der Vorrichtung 1, bzw. dessen zentraler Hydraulikzylinder (verdeckt), kann mit Hilfe eines um eine zentrale Achse 20 auf einem Innengewinde des zweiten bzw. oberen Teils 22 der Vorrichtung 1 schraubbar angeordneten Spannvorrichtung 32 reguliert und reproduzierbar eingestellt werden.

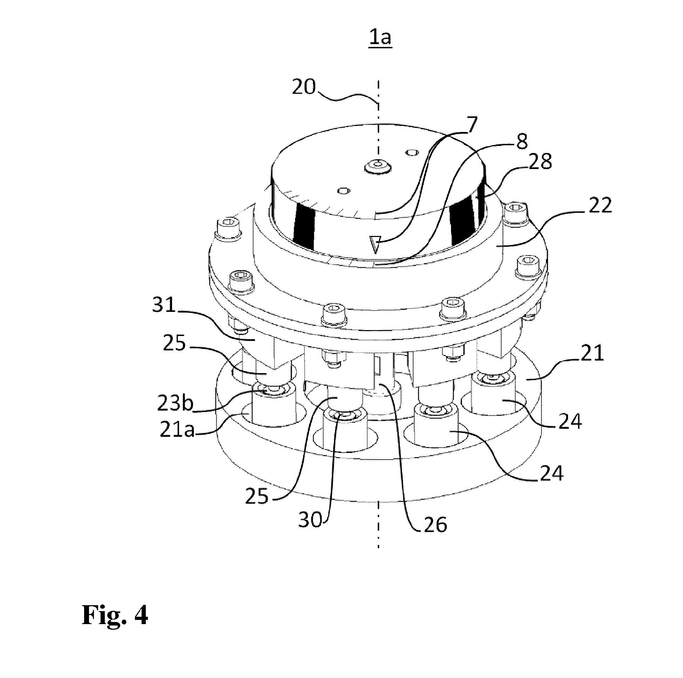

Fig. 4 zeigte eine alternative Ausführungsform 1a der Vorrichtung mit einer einschraubbaren Spannvorrichtung 28, die mit einer Markierung 7 versehen ist. Die Markierung kann auf verschiedene Art ausgeführt sein. Die Stellung der Markierung zu einer umlaufenden Skale auf dem zweiten Teil 22 dient zur Einstellung des hydrostatischen Drucks bzw. zur Kalibrierung der Anpresskraft. Die in Umfangsrichtung in 360 Grad umlaufende Skale bzw. eine Gradeinteilung und die Markierung können gemeinsam zur reproduzierbaren Einstellung eines Anpressdrucks genutzt werden.

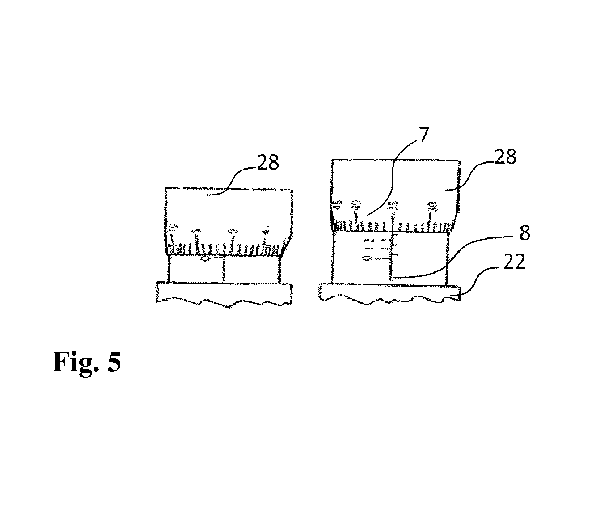

Alternativ kann der jeweils vollzogene mechanische Vortrieb des zentralen Hydraulikzylinders durch eine Spannvorrichtung 28 in Form einer mit einem Feingewinde und einer Ratsche ausgestatteten Feinsstellschraube bzw. Mikrometerschraube zur Kalibrierung des aufgebauten hydrostatischen Drucks bzw. der probenseitig erreichten Anpresskraft genutzt werden. Eine derartige Ausführungsform bei unterschiedlichem Vorschub des zentralen Hydraulikzylinders schematisch in Fig. 5 gezeigt. Zueinander korrespondierende Skalen können gleichzeitig entweder vertikal ablesbar sein, vertikal und horizontal ablesbar sein, oder horizontal ablesbar sein, so dass beide Skalen beim Blick auf die Vorrichtung von oben abgelesen werden können. Alternativ kann durch die Anordnung und Ausführung der Skalen eine Ablesbarkeit der Skalenteilung oder zugehöriger Skalenwerte sowohl horizontal, als auch vertikal ermöglicht sein. Varianten dieser Ausführungsformen sind in Fig. 4 und in Fig. 5 beispielhaft dargestellt.

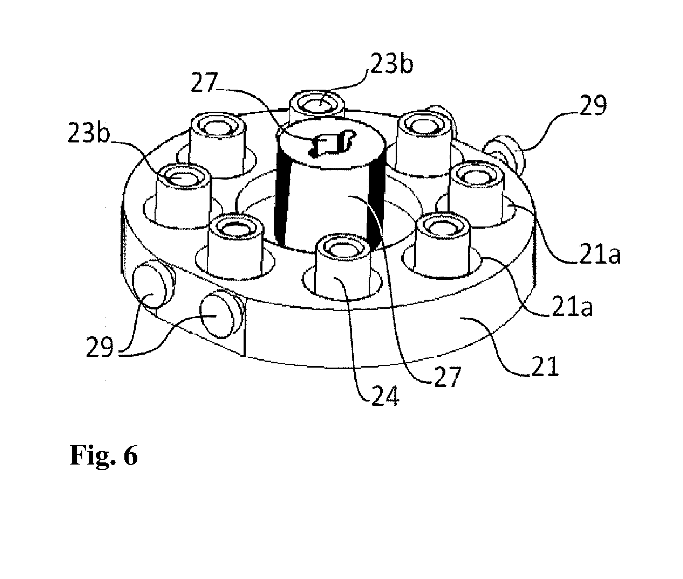

Fig. 6 zeigt eine Detailansicht des ersten Teils 21 der Vorrichtung 1 mit acht konzentrisch um ein Verbindungselement 26 angeordneten Aufnahmen 21a. Jede Aufnahme 21a ist mit einer Probe versehen. Die Andruckflächen 23b der Massekörper 23 sind durch die Führungshülsen gestützt. Seitlich sind Arretierungsmittel 29 bzw. Haltemittel 29 vorgesehen, die eine erleichterte Halterung der Vorrichtung mit einem geeigneten Greifarm erlauben. Mit Hilfe eines Greifers 35 kann die mit Proben bestückte Vorrichtung gegebenenfalls automatisch verkippungsfrei transportiert werden.

Das Verbindungselement ist in Form eines Bajonettverschlusses 27 ausgeführt. Das korrespondierende Gegenstück des Bajonettverschlusses befindet sich auf dem zweiten Teil 22 der Vorrichtung 1.

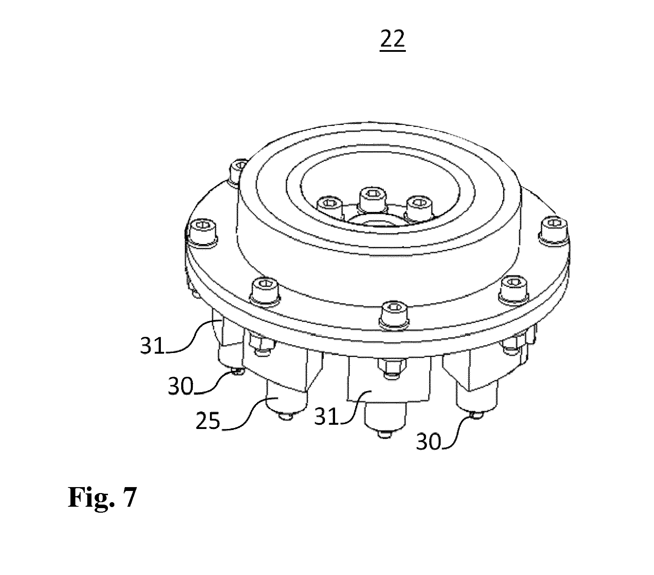

Fig. 7 zeigt den zweiten bzw. oberen Teil der Vorrichtung, umfassend fluidisch miteinander kommunizierende Hydraulikzylinder 25, die jeweils in einer feststehenden Führung 31 laufen, und jeweils zentral daran angeordnete Druckpunkte 30 aufweisen.

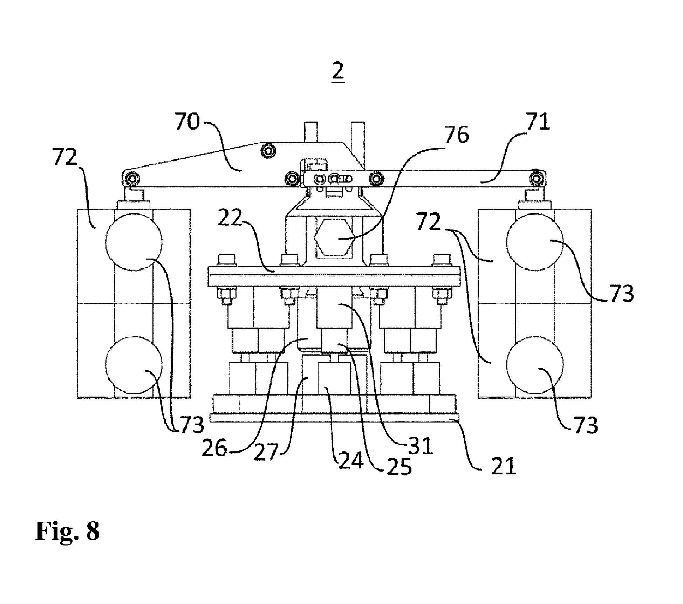

Fig. 8 zeigt die Frontalansicht einer weiteren Ausführungsform 2 der Vorrichtung mit zwei, miteinander kooperierenden Hebeln 70, 71. Die von den einzelnen Hydraulikzylindern 25 auf die Proben ausgeübte Kraft ist somit unabhängig von der jeweiligen Temperatur der äußeren Umgebung, die einer jeweils gezielt eingestellten Arbeitstemperatur entspricht.

Die - beispielsweise in einem Laborofen bzw. einer Wärmekammer - eingestellte Temperatur (Umgebungstemperatur), entspricht beispielsweise einer Verarbeitungstemperatur eines heiß aushärtenden Klebstoffs (Klebstoffverarbeitungstemperatur). Typische Klebstoffverarbeitungstemperaturen liegen beispielsweise im Bereich von 80 °C bis 250 °C. Insbesondere kann die Verarbeitungstemperatur eines Schmelzklebstoff s (physikalisch aushärtender Klebstoff) bei einer Temperatur von 200 °C liegen. Ebenso kann ein chemisch aushärtender Klebstoff durch Wärmezufuhr ausgehärtet werden.

Beim individuellen Heizen einzelner oder aller in den jeweiligen Probenaufnahmen befindlichen Materialpaarungen "Fügeflächenmodul//Fügemittel//Substrat" kann zudem jeweils eine individuelle Temperatur eingestellt werden. Für dieses individuelle Heizen eignen sich insbesondere elektrisch betriebene Heizelemente. Ein solches Heizelement kann auf dem Prinzip einer Widerstandsheizung / Joulsche Wärme, aber auch auf dem Prinzip einer induktiven Erwärmung beruhen. Ebenso kann mittels elektromagnetischer Wechselfelder eine Klebstoffschicht selektiv erwärmt werden, wenn die Schicht magnetische Partikel enthält. Geeignete Kleber sind beispielsweise mit Nanopartikeln gefüllt, deren Durchmesser unter der beabsichtigten Schichtdicke des Klebers liegt. Während eine typische Dicke einer Klebstofffläche von 10 bis 500 µm, insbesondere bis 400 µm, typischerweise 100 bis 200 µm beträgt, weisen die Partikel einen Durchmesser von etwa 10 bis 15 nm auf. Typischerweise ist ein ferromagnetischer Kern der Partikel zumindest 10 nm groß.

Insbesondere kommen metallische Nanopartikel aus Eisen, Cobalt oder darauf basierenden Legierungen als Füllstoffe derartig erhitzbarer Fügemittel in Betracht. Vorteilhafterweise kann dabei eine Klebstoffschicht selektiv erwärmt werden, ohne dass ein mit dem Klebstoff in Kontakt stehendes Substrat übermäßig thermisch belastet wird. Üblicherweise wird der solcherart gefüllte Klebstoff durch ein externes Magnetfeld aufgeheizt, das über eine in oder unter der Probenaufnahme angeordneten Spule eingekoppelt wird. Über Frequenz, ggf. Pulsrate, Spannung und Strom kann sehr genau eine bestimmte Temperatur in der Klebstoffschicht eingestellt werden und der aufgebrachte Klebstoff "von innen" aushärtet werden.

Eine Umgebungstemperatur im Bereich von 200 °C bewirkt eine deutliche Expansion der im Hydrauliksystem eingesetzten Arbeitsflüssigkeit. Beispielsweise kann der resultierende Anpressdruck erheblich von einem beabsichtigten und voreingestellten Druck abweichen, wenn die Ausdehnung der Arbeitsflüssigkeit (Hydraulikflüssigkeit) bzw. des Behälters außer Acht gelassen wird.

Ein besonderer Vorteil der wie beschrieben mit zumindest einem Hebelarm ausgestatteten Vorrichtung besteht darin, dass der über ein gewähltes Gewicht oder Teilgewichte und die Länge des Hebelarms voreingestellte Druck tatsächlich und unabhängig von der Umgebungstemperatur während der Versuchsdurchführung (Fügen, z.B. Kleben, Löten) gehalten und aufrechterhalten wird. Die Verfälschung eines voreingestellten Drucks durch eine Ausdehnung der in einem Hydraulikzylinder eingesetzten Arbeitsflüssigkeit oder eine dehnungsbedingte Veränderung der Größe eines Arbeitszylinders wird somit unterbunden. Das erleichtert die standardisierte Versuchsdurchführung und verbessert die Zuverlässigkeit erhobener Befunde. In den dafür vorgesehenen Aufnahmen des unteren Teils /Probentellers 21 werden die Proben angeordnet (hier nicht gesondert gekennzeichnet). Dann wird der erste oder untere Teil 21 der Vorrichtung 2 mit dem zweiten bzw. oberen Teil 22 der Vorrichtung 2 über zentral angeordnete Verbindungselemente 26, 27 verbunden. Das Hydrauliksystem ist mit einer geeigneten Flüssigkeit gefüllt. Dazu wird eine an die Prüftemperatur bzw. die jeweils eingestellte Umgebungstemperatur angepasste Arbeitsflüssigkeit, z.B. ein Hydrauliköl, über die mit einer Befüll- bzw. Ablassschraube 76 verschlossene Öffnung (nicht gezeigt) in das Hydrauliksystem blasenfrei eingefüllt. Alsdann kann die Vorrichtung in einer Klimakammer oder einem Ofen angeordnet werden, wo die gewünschte Temperatur eingestellt wird oder bereits eingestellt ist.

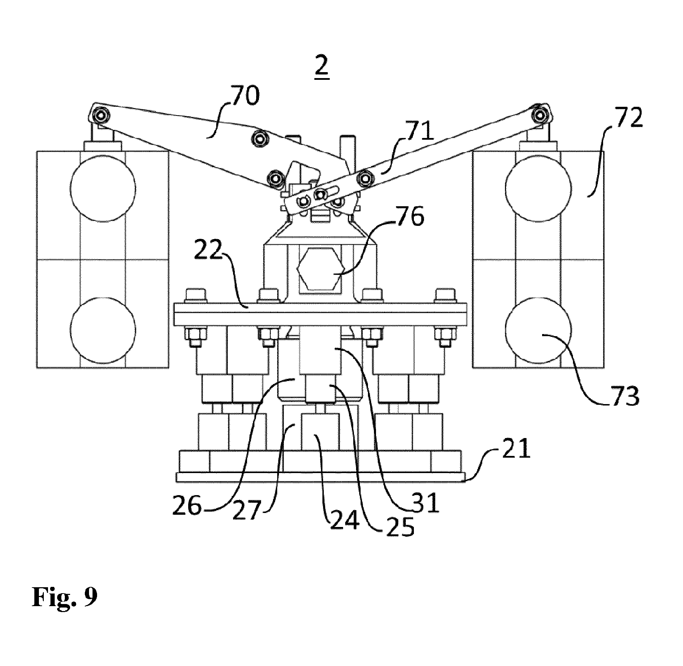

Fig. 9 zeigt die Frontalansicht dieser Ausführungsform der Vorrichtung. Hier ist der Hebelmechanismus im angehobenen Zustand gezeigt. Die Gewichte werden durch die temperaturbedingte Ausdehnung der Arbeitsflüssigkeit im Hydrauliksystem angehoben. Wenn sich die hydraulische Arbeitsflüssigkeit in Folge einer Zunahme der Umgebungstemperatur ausdehnt, würde sich das ohne diesen Hebelmechanismus in einer proportional zur Volumenzunahme überhöhten und vom voreingestellten Wert abweichenden Kraft äußern. Das wiederum kann zu einer verminderten Dicke einer Klebstoffschicht der untersuchten Proben führen. Wird keine solche Hebelvorrichtung eingesetzt, so kann der unter realen Versuchsbedingungen bei einer Umgebungstemperatur von 200°C erreichte Anpressdruck von dem mit einer Rändelschraube voreingestellten Wert im Ergebnis thermischer Effekte (Ausdehnung der Hydraulikflüssigkeit, Volumenänderung der Vorrichtung) deutlich abweichen. Eine Temperatur von 200 °C entspricht durchaus einer beispielhaften Verarbeitungstemperatur für bestimmte Hochtemperaturklebstoffe oder einer Umschmelztemperatur bestimmter Lotpasten oder Lotdepots.

Der beschriebene Hebelmechanismus 70, 71 gestattet es, auf die Verwendung der zuvor beschriebenen Messschraube bzw. Spannvorrichtung 28 zu verzichten. Mit einer auf einen zentralen Arbeitszylinder Druck ausübenden Hebelvorrichtung kann die Mehrprobenanpressvorrichtung bei solchen Umgebungstemperaturen verwendet werden, die der Verarbeitungstemperatur von Hochtemperaturklebstoffen oder von Loten entsprechen. Der jeweils im Hydrauliksystem erreichte Druck - und damit die an der Probe auftretende Anpresskraft - ist unabhängig von einer nahezu nicht vermeidbaren Ausdehnung der im Hydrauliksystem eingesetzten Arbeitsflüssigkeit.

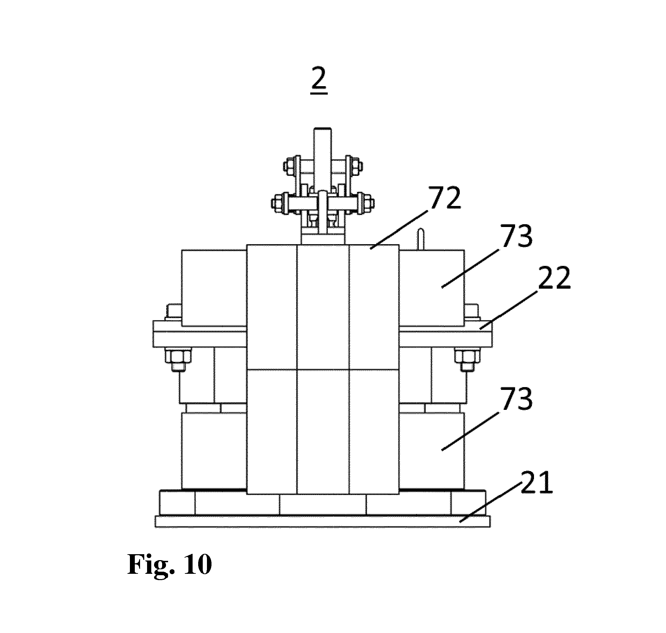

Fig. 10 zeigt eine Seitenansicht der Ausführungsform 2 der Vorrichtung mit einem Hebelmechanismus. Die den Gewichten 72 angefügten Teilgewichte 73 ragen seitlich nicht über die Breite von Oberteil 22 bzw. Unterteil 21 heraus. Auch hier wird die kompakte Form der vorgeschlagenen Bauweise deutlich.

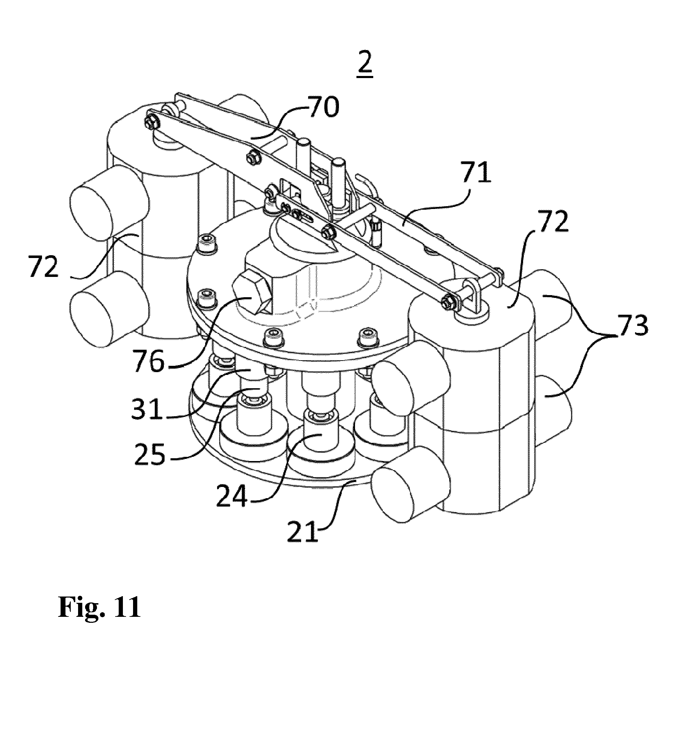

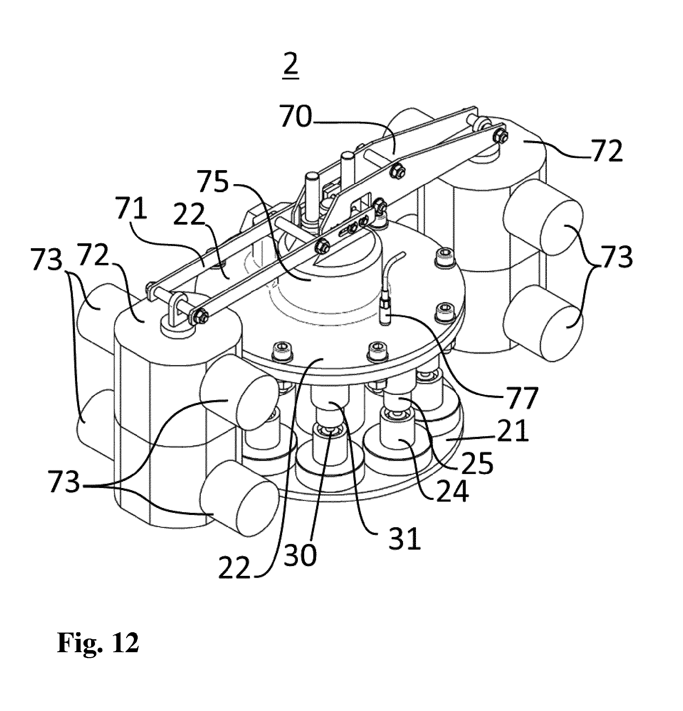

Die Fign. 11 und 12 zeigen perspektivische Ansichten einer Ausführungsform der Vorrichtung 2 mit einem doppelten Hebelmechanismus von vom und von der Rückseite. Die beiden Hebelarme 70, 71 sind hier jeweils aus zwei miteinander verbundenen Teilen aufgebaut. In der dargestellten Ausführungsform greifen die beiden Hebelarme ineinander und üben jeweils über ein Lager Druck auf einen zentralen Druckkolben bzw. den zentralen Hydraulikzylinder 75 aus. Andere Ausführungsformen, beispielsweise mit nur einem Hebelarm, sind ebenso möglich. Eine gesondert angebrachte Druckmesssonde 77 kann zur Echtzeit-Erfassung des im Hydrauliksystem herrschenden Drucks dienen. Weitere Sonden, etwa eine Temperatursonde, ein Thermopaar oder eine Druckmessdose können auf geeignete Art und Weise in die Vorrichtung integriert werden.

Die Fign. 11 und 12 zeigen anschaulich die Anordnung der aus einfach miteinander zu verbindenden Elementen aufgebauten Gewichte 72, 73. In Abhängigkeit der jeweils miteinander kombinierten bzw. der jeweils miteinander verbundenen Teilgewichte 72 bzw. Gewichtssegmente 73 kann ein unterschiedlicher Anpressdruck erreicht werden. Alternativ können mit dem gleichen Ziel auch verschiedene Gewichte an unterschiedlichen Positionen des Hebelarms (Lastarms) befestigt werden.

Beispielsweise kann die Gesamtmasse eines am Hebelarm befestigten Gewichtes im Bereich zwischen 1 kg und 10 kg liegen und aus einzelnen Teilgewichten 72, 73 bzw. Gewichtssegmenten einer Masse von 100 g bis zu 5 kg zusammengesetzt sein. So kann ein am Hebelarm hängendes Teilgewicht 72, 73 eine Masse von 500 g bis 2 kg aufweisen. Vorzugsweise sind die jeweils am Hebelarm befestigten Gewichte teilbar und zusätzlich um seitlich angeordnete Segmente (Rundstücke) 73 erleichterbar, so dass - beispielsweise - zwischen 2 kg; 2,5 kg; 4 kg; 4,5 kg und 5 kg Masse je Seite variiert werden kann. Dementsprechend werden etwa 40 bis 100 % der mit dem jeweiligen Hebelarm erreichbaren Maximaldruckkraft aufgebracht. Die Gewichte können beispielsweise aus Messing gefertigt sein.

Gemäß bevorzugter Ausführungsformen wird die Verbindung zwischen einem ersten und einem zweiten Teil über zumindest ein Halterungselement 26, 27 realisiert, das zentral entlang einer gedachten Achse 20 angeordnet sein kann. Ein mechanischhydraulischer Andruckmechanismus umfasst einzeln ausfahrbare Hydraulikzylinder 25, die jeweils in einer feststehenden Führung 31 laufen, die parallel zur gedachten Achse 20 angeordnet ist. Die Zahl und Anordnung der Hydraulikzylinder entspricht der Zahl und Anordnung der Aufnahmen im ersten Teil der Vorrichtung und bestimmt somit die Anzahl der in einem Anpressvorgang handhabbaren Proben.

Die Verwendung der Vorrichtung gestattet es beispielsweise, die Reproduzierbarkeit fachüblicher Verfahren zur Festigkeitsprüfung von Klebeverbindungen zu verbessern, indem der je Probe ausgeübte Anpressdruck unabhängig von der jeweiligen Höhe der Probe bzw. des Schichtaufbaus aus Fügeflächenmodul / Klebstoffschicht / Substrat ist.

Gemäß dem vorgeschlagenen Verfahren wird beispielsweise zunächst der vorzugsweise mit einem Gewinde 40a versehene Stift eines Fügeflächenmoduls 40 im Massekörper 23 fixiert und auf das mit dem zu prüfenden Fügemittel versehene Substrat aufgesetzt. Je nach Art und Beschaffenheit des verwendeten Fügemittels / beispielsweise eines Klebstoffs / kann das unmittelbar nach dessen Auftragen oder in zeitlichem Abstand dazu erfolgen.

Im Anschluss daran wird der zweite Teil der Vorrichtung möglichst probenoberflächennah bis vor die höchste Probe abgesenkt und arretiert. Dazu kann wahlweise sowohl ein vollständiges Absenken des zweiten Teils 22 als auch - bei axial fixiertem zweiten Teil - lediglich des hydraulischen Andruckmechanismus des zweiten Teiles erfolgen. Der Andruckmechanismus selbst besteht aus einem zentralen Hydraulikflüssigkeitsreservoir, das einzelne, kleinere Hydraulikzylinder speist. Nach dem probenoberflächennahen Absenken des gesamten Andruckmechanismus wird dieser nun, ggf. unter Zuhilfenahme von Führung(en) auch nach oben arretiert und parallel dazu oder im Anschluss daran der Druck im zentralen Hydraulikflüssigkeitsreservoir erhöht, was zum weiteren Ausfahren der einzelnen Hydraulikzylinder nach unten in Richtung der Proben führt.

Die Hydraulikzylinder kommen so, je nach Probenhöhe, nach und nach zentral in Kontakt mit den Proben. Nachdem sich alle Hydraulikzylinder in Kontakt mit den Proben befinden, sind die Proben einem einheitlichen Andruck ausgesetzt. Der Klebanpressdruck kann dann durch weiteres Erhöhen des Druckes im zentralen Hydraulikflüssigkeitsreservoir gleichzeitig für alle Proben, unabhängig von den ggf. unterschiedlichen Probenhöhen, bis zum gewünschten Sollwert definiert gesteigert werden.

Die beschriebene Vorrichtung und das vorgeschlagene Verfahren sind gegenüber vorbekannten Lösungen zuverlässiger. Das bisher übliche Auflegen eines Massekörpers in Form einer Metallplatte ergibt nur für Proben mit identischer Probenhöhe vergleichbare Anpressdrücke. Letzteres ist aber für die Ausprägung einer einheitlichen Klebstoffdicke und daraus resultierend eines von Probe zu Probe einheitlichen Aushärteverhaltens des Klebstoffes und dies wiederum als eine Voraussetzung für eine von Probe zu Probe einheitlichen Verbundfestigkeit unverzichtbar. Vorzugsweise können Proben typischer Durchmesser im Zentimeter-Bereich oder darunter gleichzeitig mit identischem Anpressdruck verklebt oder andersartig stoffschlüssig oder formschlüssig gefügt bzw. verbunden werden, wobei bezüglich der Probenhöhe sowohl mikroskopische Höhentoleranzen als auch gewisse makroskopische Unterschiede (konstruktiv bedingte Unterschiede in den Probenhöhen) zu keinen Einschränkung der Reproduzierbarkeit führen.

Ein wesentlicher Vorteil der vorgeschlagenen Vorrichtung und das vorgeschlagenen Verfahrens besteht darin, dass jeweils gleichzeitig mehrerer Proben voneinander abweichender Höhe mit einem für alle Proben identischen Anpressdruck beaufschlagt werden können. Dabei kann der Anpressdruck reproduzierbar eingestellt werden, ist somit definiert und nach geeigneten Kalibrierverfahren bestimmbar.

Weiterhin wird durch die Kombination geeigneter Module, angepasster Massekörper und daran angepasste Führungshülsen mit der vorgeschlagenen Vorrichtung bzw. dem darauf basierenden Verfahren erreicht, dass die erste Seite des Fügeflächenmoduls planparallel zur Substratoberfläche angeordnet ist, wobei der Spalt zwischen Fügeflächenmodul und Substrat vollständig mit dem Fügemittel gefüllt ist und gefüllt bleibt, da die Position der Komponenten der Probe während des eigentlichen Fügevorganges stabilisiert ist. Somit wird für alle mit der vorgeschlagenen Vorrichtung gepressten Proben, auch wenn sie sich in ihrer Höhe unterscheiden, ein identischer Anpressdruck unter Aufrechterhaltung ihrer Ausrichtung zueinander gewährleistet. Die Vorrichtung und das Verfahren sind für unterschiedliche Anwendungen der Fügetechnik, insbesondere für das stoffschlüssige Fügen, aber auch für das Prägen, Einprägen und Einpressen geeignet.

Vorteilhafterweise ist die Vorrichtung bzw. das vorgeschlagene Verfahren dann einsetzbar, wenn eine parallele Beaufschlagung einer Vielzahl von Objekten mit einem identischen Anpressdruck bzw. -kraft erforderlich ist, wie beispielsweise für Anwendungen in der Materialprüfung für die Klebetechnik, bei der Festigkeitsprüfung oder in anderen Bereichen der Materialforschung und des Qualitätsmanagements.

Vorteilhafte Kombinationen der vorstehend genannten Ausführungsformen ermöglichen die Bereitstellung einer Vorrichtung und deren Verwendung gemäß eines standardisierbaren Konzepts, insbesondere eines Prüfverfahrens. Die Standardisierbarkeit beruht einerseits auf dem definierten und für alle zu fügenden Proben identischen Anpresskraft, unabhängig von deren Höhe. Andererseits gestatten vorteilhafte Kombinationen der beschriebenen Ausführungsformen die gleichzeitige Behandlung mehrerer Proben in einem Fügevorgang und die Steigerung des Probendurchsatzes.

Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der vorliegenden Erfindung abzuweichen. Die nachfolgenden Ansprüche stellen einen ersten, nicht bindenden Versuch dar, die Erfindung allgemein zu definieren.

### Bezugszeichenliste

- 1, 1a, 2: hydraulikbasierte Mehrprobenfügevorrichtung (MPFV)
- 7, 8: Markierung oder umlaufende Skale, z.B. Gradeinteilung
- 20: Achse
- 21: erstes Teil bzw. Unterteil der MPFV; Probenteller
- 21a: Substrat- bzw. Probenaufnahme
- 22: zweites Teil bzw. Oberteil der MPFV mit mechanisch-hydraulischem Andruckmechanismus
- 23: Massekörper
- 23a: Gewinde zur Aufnahme des ersten Teils bzw. des Unterteils
- 23b: Andruckfläche
- 24: Führungshülse (für Massekörper)
- 24a: Verengte Durchgangsöffnung für Fügeflächenmodul
- 24b: Wandstärke der verengten Durchgangsöffnung
- 25: Hydraulikzylinder
- 26: Verbindungselement des zweiten Teils (Oberteils) zum ersten Teil (Unterteil)
- 27: Verbindungselement des ersten Teils (Unterteils) zum zweiten Teil (Oberteil)
- 28: einschraubbare Spannvorrichtung zur Erhöhung des Flüssigkeitsdrucks im zentralen Reservoir
- 29: Arretierungsmittel (für Greifarm bzw. Haltemittel)
- 30: Druckpunkt des Hydraulikzylinders
- 31: feststehende Führung des Hydraulikzylinders, fluidisch mit zentralem Hydraulikreservoir verbunden
- 32: schraubbare Spannvorrichtung zur Erhöhung des Flüssigkeitsdrucks im zentralen Reservoir
- 33: Arretierungsmutter zur probehöhenbezogenen Verbindung von erstem und zweitem Teil, bzw. von Unter- und Oberteil der Vorrichtung
- 34: Gewinde
- 35: Greifarme, Haltemittel (lösbar)
- 40: Fügeflächenmodul
- 40a: Gewinde des Fügeflächenmoduls
- 40b: Höhe des Fügeflächenmoduls
- 41: erste Seite des Fügeflächenmoduls, Fügefläche
- 50: Substrat
- 60: Fügemittel, z.B. Klebstoff, Lotpaste, Lot, Bindemittelschicht
- 70, 71: Hebelarm
- 72: Gewicht
- 73: Teilgewicht (Segment)
- 75: zentraler Hydraulikzylinder (Reservoir) mit zentralem Druckkolben
- 76: Befüll- und Ablassschraube für Hydraulikflüssigkeit
- 77: Drucksensor

## Patentansprüche

1. Vorrichtung (1, 1a) zum Aufbringen einer gerichteten Andruckkraft auf eine Vielzahl von Proben, wobei ein erster Teil (21) der Vorrichtung eine Vielzahl von Probenaufnahmen (21a) aufweist, die angepasst ist, eine Vielzahl von gleichartigen Fügeflächenmodulen (40) aufzunehmen, und ein zweiter Teil (22) der Vorrichtung mit dem ersten Teil (21) verbindbar ist, sodass eine Vielzahl fluidisch miteinander kommunizierender Hydraulikzylinder (25) in einem der beiden Teile (21, 22) die Fügeflächenmodule (40) gleichzeitig in einer Belastungsrichtung mit einer vorgegebenen und für alle Proben im Wesentlichen gleichen Kraft belasten kann.

2. Vorrichtung nach Anspruch 1, wobei der erste (21) und der zweite Teil (22) durch zumindest ein mit dem jeweiligen Teil (21, 22) verbundenes Halterungselement (26) miteinander verbindbar oder verbunden sind, und wobei das Halterungselement (26) des ersten Teils (21) eine zum Halterungselement (27) des zweiten Teils (22) korrespondierende Form aufweist.

3. Vorrichtung nach Anspruch 1 oder 2, wobei der erste Teil (21) mit dem zweiten Teil (22) durch Halterungselemente (26, 27) zueinander korrespondierender Form über ein Scharnier, über ein Gewinde, über einen Bajonettverschluss, über einen Steckdrehanker, über eine Nut/ Nutenstein-Kupplung oder nach dem Schlüssel-Schloss-Prinzip miteinander verbindbar sind.

4. Vorrichtung nach einem der Ansprüche 1 bis 3, wobei die Probenaufnahmen (21a) zumindest teilweise in einem identischen radialen Abstand um das Halterungselement (26) angeordnet sind.

5. Vorrichtung nach einem der Ansprüche 1 bis 4, wobei ein externer Hydraulikzylinder an den Teil der Vorrichtung anschließbar ist, in dem die Hydraulikzylinder (25) angeordnet sind, so dass die Druckpunkte (30) der Hydraulikzylinder (25) von einem gemeinsamen hydraulischen Antrieb bewegt werden können.

6. Vorrichtung nach einem der Ansprüche 1 bis 5, wobei die in einem der Teile angeordneten Hydraulikzylinder (25) so angepasst sind, dass sie gemeinsam durch einen unmittelbar im selben Teil beweglich zentral angeordneten Hydraulikzylinder mit hydrostatischem Druck beaufschlagt werden können.

7. Vorrichtung nach einem der Ansprüche 1 bis 6, umfassend eine schraubbare Spannvorrichtung (28, 32) die angepasst ist, sodass ein reproduzierbares Einstellen des hydrostatischen Drucks und/oder der Andruckkraft erfolgen kann.

8. Vorrichtung nach Anspruch 7, wobei die schraubbare Spannvorrichtung (28, 32) eine Markierung (7) oder eine Skale (8) aufweist, und der erste Teil (21) oder der zweite Teil (22) eine zur Markierung (7) oder zur Skale (8) der schraubbaren Spannvorrichtung (28, 32) korrespondierende Markierung (7) oder Skale (8) umfasst, die so eingerichtet ist, dass eine diskrete Stellung der schraubbaren Spannvorrichtung, welche einem diskreten Vorschub eines zentralen Hydraulikzylinders entspricht, reproduzierbar einstellbar ist.

9. Vorrichtung nach Anspruch 7, umfassend eine Feinmessschraube oder eine Mikrometerschraube, wobei vorzugsweise die schraubbare Spannvorrichtung (28, 32) ein Präzisionsgewinde aufweist, sodass auf einer Skale, die parallel zu einer Achse (20) der Vorrichtung angeordnet ist, die Größe des Vorschubs, ausgedrückt in ganzen Ganghöhen eines Schraubgewindes der schraubbaren Spannvorrichtung (28, 32), typischerweise als ganze oder halbe Millimeter abgelesen werden kann; und wobei eine zweite Skale entlang eines Umfangs des mit der schraubbaren Spannvorrichtung (28, 32) versehenen ersten oder zweiten Teils (21, 22) der Vorrichtung (1, 1a) eingerichtet ist, eine Ablesung eines Anteils einer ganzen Ganghöhe, der nur einen Bruchteil einer Ganghöhe beziehungsweise einer Gewindesteigung ausmacht, zu ermöglichen.

10. Vorrichtung nach Anspruch 6, wobei der zentral angeordnete Hydraulikzylinder einen zentralen Druckkolben (75) aufweist.

11. Vorrichtung nach Anspruch 10, weiterhin umfassend einen Hebelarm (70, 71) mit einem Gewicht (72), das über eine Hebelwirkung Druck auf den zentralen Druckkolben (75) ausübt.

12. Vorrichtung nach Anspruch 10, wobei zwei Hebelarme (70, 71) einander gegenüberliegend so angeordnet sind, dass sie jeweils über die Hebelwirkung mit einem Gewicht (72) Druck auf den zentralen Druckkolben (75) ausüben.

13. Vorrichtung nach Anspruch 11 oder 12, wobei das Gewicht (72) aus Teilgewichten oder Segmenten besteht, die aneinander befestigbar sind.

14. Vorrichtung nach einem der Ansprüche 11 bis 13, wobei das Gewicht (72) eine Gesamtmasse im Bereich zwischen 1 und 10 kg aufweist und einzelne Teilgewichte oder Gewichtssegmente Massen von 100 g bis zu 5 kg, vorzugsweise Massen von 500 g bis 2 kg aufweisen.

15. Vorrichtung nach einem der Ansprüche 10 bis 14, weiterhin umfassend eine verschließbare Öffnung zum Befüllen des zentral angeordneten Hydraulikzylinders mit einer Flüssigkeit und/oder zum Ablassen der Flüssigkeit.

16. Vorrichtung nach einem der vorstehenden Ansprüche, wobei eine im Hydraulikzylinder (25) befindliche Flüssigkeit eine nicht kompressible und in einem gewählten Temperaturbereich stabile Flüssigkeit ist, ausgewählt unter: Wasser, einer wässrigen Lösung, einem Hydrauliköl, einem Silikonöl, und einer Wärmeträgerflüssigkeit aus dem Anwendungsbereich der Solarthermie.

17. Vorrichtung nach einem der vorstehenden Ansprüche, wobei ein Abstand zwischen einem Druckpunkt (30) eines Hydraulikzylinders (25) und einer Andruckfläche (23b) durch eine Arretierungsmutter (33) eingestellt und/oder festgestellt werden kann.

18. Vorrichtung nach einem der vorstehenden Ansprüche, weiterhin umfassend eine Anzeigevorrichtung zur Anzeige einer Anpresskraft oder eines hydrostatischen Druckes.

19. Vorrichtung nach einem der vorstehenden Ansprüche, zusätzlich aufweisend ein Arretierungsmittel (29) zur verkippungsfreien Aufnahme und/oder zum Transport der Vorrichtung mit einem Haltemittel (35).

20. Vorrichtung nach einem der vorstehenden Ansprüche, wobei zumindest eine Probeaufnahme (21a) ein Heizelement zum individuellen Heizen des in der Probeaufnahme (21a) aufgenommenen Fügeflächenmoduls (40) und/oder eines Fügemittels (60) im Kontakt mit dem Fügeflächenmodul (40) umfasst.

21. Vorrichtung nach Anspruch 20, wobei das zumindest eine Heizelement ausgewählt ist unter einer Widerstandsheizung und einer Induktionsspule.

22. Verfahren zum gleichzeitigen Aufbringen eines vorgegebenen identischen Anpressdrucks auf eine Vielzahl von Proben unterschiedlicher Höhe, umfassend:
- Anordnen der Vielzahl von Proben in gesonderten Aufnahmen (21a) eines Probentellers (21) derart, dass jeweils eine Stirnseite einer Probe im Wesentlichen parallel zu einem Probenteller (21) ausgerichtet ist;
- Verbinden eines mechanisch hydraulischen Andruckmechanismus (22) mit dem Probenteller (21) derart, dass der Andruckmechanismus (22) in einem ersten Abstand zum Probenteller (21) weitestgehend parallel zum Probenteller (21) ausgerichtet ist, wobei der erste Abstand kleiner ist, als ein mittlerer Hub eines Hydraulikzylinders (25) des Andruckmechanismus (22), welches frontal und/oder zentral zu einer Andruckfläche (23) einer Probe angeordnet ist;
- gleichzeitiges Betreiben der Hydraulikzylinder (25) und Beaufschlagen der Fügeflächenmodule (40) bzw. der Proben (42) mit einem vorgegebenen Anpressdruck entlang oder parallel zu einer Achse (2), die orthogonal zu der von dem Probenteller (21) vorgegebenen Ebene verläuft, wobei ein zweiter Abstand zum Probenteller (21) erreicht wird, wobei der zweite Abstand geringer als der erste Abstand ist;
- Entnehmen der Proben.

23. Verfahren gemäß Anspruch 22, weiterhin umfassend
- Aufbringen zumindest einer Schicht eines Klebers und zumindest einer Probe (42) auf eine erste Seite (41) eines Fügeflächenmoduls (40).

24. Verfahren gemäß Anspruch 22 oder 23, weiterhin umfassend:
- Temperieren der Vorrichtung (2), wobei das Temperieren im Bereich von - 40 bis 500 °C erfolgt.

25. Verfahren gemäß Anspruch 22 oder 23, weiterhin umfassend:
- Temperieren zumindest einer Probenaufnahme 21a, wobei das Temperieren ein Heizen mit einem Heizelement umfasst.

26. Verfahren gemäß Anspruch 25, wobei eine an einer Probenaufnahme eingestellte Temperatur individuell mit einem Messfühler erfasst wird.
